# EUROPÄISCHE PATENTANMELDUNG

(11) **EP 1 727 108 A1**
(43) Veröffentlichungstag der Anmeldung: **29.11.2006**
(21) Anmeldenummer: 05011501.3
(22) Anmeldetag: 27.05.2005
(51) Int. Cl.: G09B 25/00

(54) **Verfahren zum Unterstützen eines Benutzerfreundlichkeitstests der Bedienungsabläufe in einem zumindest teilweise softwaregesteuerten Messgerät**

(71) Anmelder: Tektronix International Sales GmbH, 8212 Neuhausen (CH)
(72) Erfinder: Schönfeld, Christian, 12205 Berlin (DE); Zander, Christian, 14612 Falkensee (DE)
(74) Vertreter: Schurack, Eduard F.

(57) **Zusammenfassung**

Bei einem Verfahren zum Unterstützen des Benutzerfreundlichkeitstests der Bedienungsabläufe in einem zumindest teilweise softwaregesteuerten Messgerät werden typische Bedienungsabläufe des Messgeräts in einzelne Tasks unterteilt (Storyboard 10, Einteilung 12). Zu jeder Task wird ein Präsentationsbild erstellt (14). Es wird eine Textdatei mit Aufrufbefehlen für die Tasks erstellt (Schritt 16). Es erfolgt ein Aufruf der Präsentationsbilder anhand von der Textdatei (18). Es ist eine Interaktion durch den Benutzer möglich (Schritt 20). Es ist möglich, dass der Benutzer einen Tasknamen für die nächste Task anzeigt. Es wird dann von dem bisherigen typischen Bedienungsablauf abgewichen. Hierzu wird im Schritt 26 die Textdatei geändert und es erfolgt ein Aufruf der Präsentationsbilder anhand von der geänderten Textdatei (18). Als Ergebnis des Benutzerfreundlichkeitstests ergibt sich entweder eine Akzeptanz durch den Benutzer oder es liegt eine geänderte Textdatei vor, die zum Zweck der Anpassung des typischen Bedienungsablaufs des Messgeräts auswertbar ist.

## Beschreibung

Die vorliegende Erfindung betrifft ein Verfahren zum Unterstützen eines Benutzerfreundlichkeitstests der Bedienungsabläufe in einem zumindest teilweise softwaregesteuerten Messgerät.

Bei der Entwicklung von softwaregesteuerten Messgeräten kann das Benutzerverhalten nicht immer vollständig vorhergesehen werden. Daher werden im Feld, sobald Prototypen des Messgeräts vorliegen, sogenannte Benutzerfreundlichkeitstests (Usability-Tests) an potentiellen Kunden durchgeführt, wobei geprüft wird, ob der Prototyp den Anforderungen des Kunden genügt oder nicht.

Bisher geschieht dies nach dem Trial- and Error-Verfahren. Es wird ein Konzept vorgestellt, das als Ganzes vom Kunden verworfen wird oder nicht. Beispielsweise wird ein sogenanntes Storyboard kreiert, das einen typischen Bedienungsablauf des Messgeräts repräsentiert. Es wird nun nicht das Messgerät zum Kunden gebracht, sondern typische Bildschirmdarstellungen auf dem Prototypen oder die auf dem Bildschirm angezeigten Dialoge werden in Form von Papier oder auf Folien zu einem potentiellen Kunden gebracht. Ein Präsentator (zum Beispiel eine Psychologin) präsentiert das Storyboard durch Vorzeigen der Folien in einer durch das Storyboard festgelegten Reihenfolge.

Ein Problem im Stand der Technik ist die mangelnde Flexibilität dieser Vorgehensweise. Äußert ein Kunde beispielsweise, dass er als Kunde einen anderen Bedienungsablauf (ein anderes Storyboard) wünschen würde, so kann der Präsentator diesen Wunsch nicht in einer vorgegebenen Art und Weise registrieren. Da das Storyboard festgelegt ist, kann er sehr schlecht vor Ort die Reihenfolge der Folien ändern. Dies gilt insbesondere auch für PowerPoint-Repräsentationen, bei denen eine Reihenfolge von Displays festgelegt ist. Der Präsentator kann das Storyboard daher höchstens zu Ende vorstellen, auch wenn bereits festgestellt wurde, dass dieses Storyboard für den betreffenden Kunden nicht geeignet ist.

Es ist Aufgabe der Erfindung, dem Präsentator die Möglichkeit zu verleihen, flexibel auf den Kunden zu reagieren und gleichzeitig diese Reaktion für eine Auswertung zum Zwecke einer Anpassung des Prototypen an geänderte Anforderungen zu protokollieren.

Zur Lösung dieser Aufgabe schlägt die Erfindung ein Verfahren gemäß Patentanspruch 1 vor.

Demgemäß werden typische Bedienungsabläufe (Storyboards) des Messgeräts in einzelne Tasks unterteilt. Eine Task ist dadurch gekennzeichnet, dass nach ihrem Ablauf ein Benutzer des Messgeräts eine Ablaufentscheidung über die als nächstes ablaufende Task treffen kann. Tasks sind also Aufgabenkomplexe, die aus Teilaufgaben bestehen, die zwangsläufig hintereinander ablaufen müssen. Die Unterteilung in Tasks bedeutet nicht, dass auf dem Prototyp tatsächlich nach der Task zwangsläufig ein Wechsel stattfindet, sondern nur das er theoretisch auf Benutzerwunsch erfolgen könnte.

Erfindungsgemäß wird zu jeder Task zumindest ein auf einem Bildschirm anzeigbares Bild erzeugt, wobei das Bild unter anderem die Dialogtexte umfasst, die auf dem Bildschirm des Messgeräts angezeigt werden, oder auch Abbildungen des Bildschirms (Screenshots) darstellt. Nun werden die typischen Bedienungsabläufe des Messgeräts (also das Storyboard) als Reihenfolge der Tasks in Form einer Textdatei abgespeichert, wobei die Textdatei Namen enthält, mit denen die Bilder zu je einer Task aufgerufen werden können. Gegenüber einem potentiellen Benutzer des Messgeräts sind anhand der Einträge in der Textdatei zur Präsentation die Bilder Task für Task aufrufbar.

Dieses Aufrufen während der Präsentation kann mit Hilfe einer Hilfsperson erfolgen, die anhand der Textdatei, die ihr geöffnet vorliegt, Schritt für Schritt vorgeht (beispielsweise durch einfaches Drücken einer Eingabetaste) oder die Bilder können automatisch in der Task-Reihenfolge aufgerufen werden, wobei die Einträge in der Textdatei als Namen der Task zu verstehen sind, die als Aufrufbefehl bedienen.

Die Erfindung beruht also auf der Erkenntnis, dass eine wesentliche Flexibilität erzielt wird, wenn die Reihenfolge der Bilder physikalisch nicht mit den Bildern selbst verbunden ist. Bei einer PowerPoint-Präsentation ist es im Gegensatz hierzu so, dass die Reihenfolge der Bilder festgelegt ist. Bei einer Folienpräsentation hingegen ist die Reihenfolge der Folien rein physikalisch festgelegt und nicht datenmäßig erfasst.

Bei der Erfindung gibt es eine getrennte Textdatei mit den Namen für die Tasks. Die Textdatei symbolisiert das Storyboard. Eine Textdatei hat den Vorteil, dass sie leicht abänderbar ist, wobei hier eine Abänderung vorgenommen werden könnte, ohne dass an den auf dem Bildschirm angezeigten Bildern mit den Dialogtexten irgendetwas geändert wird. Es wird nur die Reihenfolge der Namen der Tasks in der Textdatei geändert.

Gemäß einer bevorzugten Ausführungsform gibt somit das Verfahren dem potentiellen Benutzer die Möglichkeit, die Task-Reihenfolge zu ändern, so dass ihm nach Ablauf der Dialogtexte zu einer Task Bilder mit Dialogtext zu einer von ihm vorgeschlagenen Task präsentiert werden, wobei vorzugsweise die Textdatei geändert oder ergänzt wird. Mit anderen Worten kann dem potentiellen Benutzer die Möglichkeit gegeben werden, Computereingaben zu machen und diese (durch Änderung oder Ergänzung der Textdatei) zu protokollieren.

Im Falle eines Benutzerfreundlichkeitstests bei einem potentiellen Kunden kann der Präsentator beispielsweise auf Veranlassung des Kunden, der feststellt dass ein ihm präsentiertes Storyboard nicht seinen Vorstellung entspricht, nach Ablauf einer bestimmten Task eine andere als die vorgesehene Task dadurch aufrufen, dass er die Textdatei an einer bestimmten Stelle, an der sich der entsprechende Aufruf befindet, ändert.

Textdateien haben auch den Vorteil, dass in ihnen Kommentare abgelegt sein können, so dass ältere Versionen der Textdatei auch als Kommentar in der Textdatei gespeichert sein können. Die Textdatei hat auch den Vorteil, dass sie nicht umfangreich kompiliert werden muss, so dass also Befehlsreihenfolgen ― anders als bei einer PowerPoint-Präsentation ― in einfacher Weise änderbar sind. Die Textdatei ermöglicht durch einfaches Eintippen mit Hilfe der Bedienperson, die nur den Task-Namen kennen muss, eine Anpassung des Storyboards. Die Bedienperson, also der Präsentator, verlässt den Kunden somit mit einem geänderten Storyboard, das bei Rückkehr in die Heimatfirma sofort zur Änderung des Prototypen des Messgeräts verwendbar ist. Anders als im Stand der Technik, bei dem mit Folien gearbeitet wurde, entfällt somit ein komplizierter Bericht. Es wurde auch das Trial- and Error-Verfahren verlassen, d. h. der Präsentator kann auch weiterarbeiten, wenn der Kunde das Storyboard verwirft und es interaktiv ändern, wobei die Änderung anhand der Textdatei mitprotokolliert wird. Das Feedback vom Kunden wird somit dokumentiert vom Kunden mit zurück gebracht.

Da zu jeder Task zumindest ein auf dem Bildschirm anzeigbares Bild mit Dialogtexten erzeugt wird, ist es auch möglich, bei vorgegebenem Bildformat lediglich einfach die Dialogtexte abzuspeichern. Mit anderen Worten, es ist eine bevorzugte Ausführungsform, dass das Bild, welches für die Task auf einem Bildschirm angezeigt wird, aus einem Textformat heraus erzeugt wird. Dadurch, dass hier auch wieder mit einer Textdatei gearbeitet wird, ist dieses Textformat mit der Textdatei mit den Namen für die Task verknüpfbar, wobei bevorzugt aber eine Trennung dadurch aufrechterhalten wird, dass aus der Textdatei mit den Namen für die Task heraus andere Dateien (beispielsweise XML-Dateien oder vorkompilierte Binärdateien im Format .DLL, .jar, .OCX) aufgerufen werden.

Mit der Erfindung wird es möglich, beim Kunden zu prüfen, ob es Fehler bei den bisher entwickelten Storyboards gibt. Durch eine qualitative und quantitative Art der Auswertung der von dem Präsentator an der Textdatei vorgenommenen Änderungen ist es insbesondere auch möglich, die Fehler zu klassifizieren und zu quantifizieren.

Es wird nun eine bevorzugte Ausführungsform unter Bezug auf die Zeichnung beschrieben, in der:

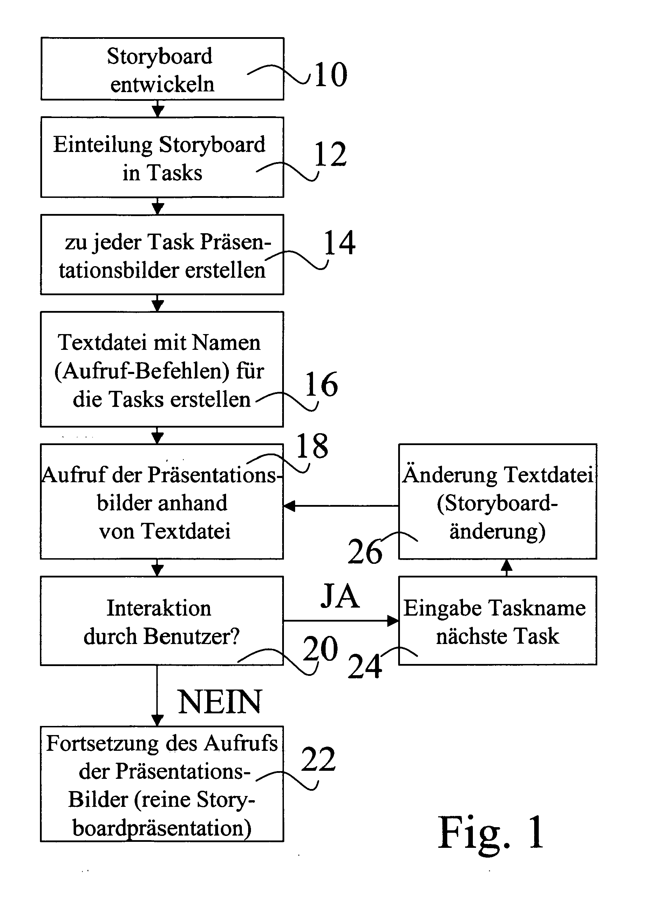

Figur 1 schematisch den Ablauf eines erfindungsgemäßen Verfahrens darstellt.

Figur 1 zeigt ein Verfahren zum Unterstützen eines Benutzerfreundlichkeitstests der Bedienungsabläufe in einem zumindest teilweise softwaregesteuerten Messgerät, wie beispielsweise einem Lasttester.

Zu einem solchen Messgerät, insbesondere auch zu einem Prototyp eines solchen Messgeräts, wird zunächst in Schritt 10 ein Storyboard entwickelt. Dies bedeutet, dass typische Bedienungsabläufe des Messgeräts erraten werden müssen. Im Schritt 12 wird nun ein solches Storyboard in Tasks eingeteilt. Eine Task ist eine Komponente zur Abarbeitung einer speziellen Aufgabe. Zur Abarbeitung dieser Aufgabe können eine beliebig hohe Zahl von Schritten erforderlich sein, die als Befehle von dem Messgerät umgesetzt werden. Es kann eine beliebige Anzahl von Dialogen (Screens) zu der Task gehören, über die der Benutzer alle für die aktuelle Aufgabe nötigen Informationen anzeigen und/oder eingeben kann. Beispiele für Tasks sind das Starten des Programms und das Beenden des Programms, das Ein- und das Ausloggen, das Öffnen von Dateien, das Zeigen von Eigenschaften von Dateien, etc.. Tasks können auch kompliziertere Aufgaben umfassen. Wesentlich ist, dass die Aufgaben, welche zu einer Task gehören, zusammenhängend sind, d. h. dass während des Ablaufs einer Task kein Wechsel zu einer anderen Aufgabe erfolgen kann. Hingegen ist nach Ablauf einer Task ein Wechsel zu einer anderen Task möglich. Eine Task ist also dadurch gekennzeichnet, dass nach ihrem Ablauf ein Benutzer des Messgeräts theoretisch eine Ablauflaufentscheidung über die als nächstes ablaufende Task treffen kann.

Im Schritt 14 werden nun zu jeder Task Präsentationsbilder erstellt. Die Präsentationsbilder sind auf einem Bildschirm anzeigbare Bilder mit Dialogtexten. Die Dialoge der einzelnen Task können entweder als vorkompilierte Binärdateien (zum Beispiel .DLL, .jar, .OCX) oder als textbasierte XML-Dateien vorliegen. Im letzteren Fall ist eine einzige binäre Komponente nötig, die aus der textuellen Konfiguration einen anzeigbaren Dialog generiert.

Es wird nun eine Textdatei mit Namen (Aufrufbefehlen) für die Tasks erstellt. Die Präsentationsbilder werden anhand von der Textdatei (Schritt 18) aufgerufen. Es liegt somit ein Textformat (zum Beispiel XML-Datei) vor, auf Grund von dem die Präsentationsbilder aufrufbar sind. Es ist dadurch eine Änderung der Taskabfolge (d. h. des Storyboards) möglich, ohne dass Programmteile neu übersetzt werden müssen. Für einen Bediener sind auch keine Programmierkenntnisse notwendig. Die Erfindung ermöglicht bereits in dieser Form einen einfachen Aufruf der Präsentationsbilder, der benutzerfreundlich ist, weil eine Hilfsperson wie beispielsweise eine Psychologin, die den Benutzerfreundlichkeitstest durchführt, die Namen aus der Textdatei lediglich abrufen muss, ohne in der Programmierung geschult zu sein. Die Hilfsperson kann hierzu ein einfaches Notebook mit sich führen.

Unter "Aufruf der Präsentationsbilder anhand der Textdatei" ist zu verstehen, dass die Hilfsperson entweder die Textdatei geöffnet vorliegen hat und die einzelnen Befehle in irgendeiner Form eingibt, so dass die Präsentationsbilder gezeigt werden, wobei bevorzugt der Name aus der Textdatei selbst als Befehl interpretiert wird, so dass die Präsentationsperson lediglich den Computer, beispielsweise durch betätigen einer Eingabetaste, den Namensaufruf lesen lassen muss. Es ist auch möglich, der Hilfsperson sofort die Präsentationsbilder zu zeigen, so dass nur anhand der Eingabetaste eine "Weiter"-Funktion aktiviert wird.

Die Erfindung ermöglicht nun zwei Ausführungsformen, nämlich eine Ausführungsform, bei der der Benutzer interagiert oder nicht. Es stellt sich also im Schritt 20 die Frage, ob eine Interaktion durch einen Benutzer stattfindet. Ist dies nicht der Fall, wird der Aufruf der Präsentationsbilder durchgehend fortgesetzt, und es findet eine reine Storyboardpräsentation des Storyboards statt, das zum Anfang in Schritt 10 entwickelt wurde.

Interessant ist der Fall, dass eine Interaktion durch den Benutzer stattfindet. Von der Hilfsperson kann eine solche Interaktion dem Computer mitgeteilt werden, indem eine von der Eingabetaste verschiedene Taste gedrückt wird, beispielsweise durch Texteingabe. Es kann dann eine Eingabe des Tasknamens der nächsten Task erfolgen (Schritt 24). Mit anderen Worten interagiert der Kunde, d. h. der potenzielle Benutzer des Messgeräts dadurch, dass er sich mit dem vorgegebenen Storyboard, welches ihm anzeigt, dass nun eine bestimmte Task aufgerufen wird, nicht einverstanden ist, indem er (oder die Hilfsperson) einen anderen Tasknamen eingibt. Es wird dann auf Grund der Eingabe des Tasknamens die Textdatei an der entsprechenden Stelle geändert. Es erfolgt eine Änderung des Aufrufs der Präsentationsbilder gegenüber der ursprünglichen Textdatei, d. h. im Schritt 18 erfolgt der Aufruf anhand von der Textdatei, die nun geändert ist. In der Regel wird danach abermals eine Interaktion durch einen Benutzer erforderlich sein, weil mit dem bisherigen Storyboard auf Grund des Sprungs zu einer anderen Task nicht fortgefahren werden kann. Es kann aber auch sein, dass eine Rückkehr zum ursprünglichen Storyboard erfolgt, in dem keine Interaktion durch den Benutzer mehr stattfindet.

Die Textdatei kann bei einer bevorzugten Ausführungsform auch Abzweigungen im Storyboard umfassen. Mit anderen Worten legt das Storyboard nicht eine einzige bestimmte Reihenfolge fest, sondern mögliche Abfolgen, wobei an bestimmten Stellen eine Entscheidung durch den Benutzer stattfinden muss. In der Textdatei kann dies nach Art eines "go to"-Befehls abgespeichert sein. Zu einer Storyboard-Änderung, wie als Schritt 26 dargestellt, kommt es hier jedoch nur dann, wenn die Interaktion durch den Benutzer im Schritt 20 ergibt, dass der Benutzer von dem Storyboard als Ganzem abweicht.

Die Einfachheit der hier auftretenden Schleife von den Schritten 20 zu den Schritten 24, 26 zurück zum Schritt 18 hat ihren Grund in der Verwendung einer reinen Textdatei. Es wird, kein Computerprogramm verwendet, das kompiliert werden müsste. Die Hilfsperson kann die Namen in der Textdatei als solche leicht verstehen, entsprechende Namen eingeben oder eingeben lassen und die Textdatei eigenständig ändern. Nicht gezeigt ist in Figur 1, dass die Schleife aus den Schritten 18, 20, 24 und 26 irgendwann durch Präsentation des letzten Bilds zu der letzten Task irgendwann endet. Man erhält auf diese Weise schließlich eine geänderte Textdatei, mit der die Hilfsperson den Kunden, an dem sie den Benutzerfreundlichkeitstests durchgeführt hat, verlässt. In der Heimatfirma kann dann die geänderte Textdatei sofort ausgewertet werden, d. h. das Feedback des Kunden ist protokolliert und kann in eine Änderung des Messgeräts oder des Prototypen des Messgeräts münden. Das spätere Computerprogramm, mit dem das endgültige Messgerät schließlich angesteuert wird, arbeitet mit einem Storyboard, wie es während des Benutzerfreundlichkeitstests verwendet wurde und insbesondere hierbei verändert wurde. Es ist sehr leicht, das Computerprogramm, welches das endgültige Messgerät steuert, anzupassen, wenn die geänderte Textdatei vorliegt. Somit können insbesondere auch kurz vor der Produktfreigabe noch Kundenwünsche, die anhand des Benutzerfreundlichkeitstests ermittelt wurden, berücksichtigt werden. Hierdurch kann die Kundenzufriedenheit mit dem Messgerät erhöht werden.

## Patentansprüche

1. Verfahren zum Unterstützen eines Benutzerfreundlichkeitstests der Bedienungsabläufe in einem zumindest teilweise softwaregesteuerten Messgerät,
**dadurch gekennzeichnet, dass**
a) typische Bedienungsabläufe (10) des Messgeräts in einzelne Tasks unterteilt (12) werden, nach deren Ablauf ein Benutzer des Messgeräts eine Ablaufentscheidung über die als nächstes ablaufende Task treffen kann,
b) zu jeder Task zumindest ein auf einem Bildschirm anzeigbares Bild mit Dialogtexten (14) aufrufbar gemacht wird,
c) typische Bedienungsabläufe des Messgeräts als Reihenfolge der Task in Form einer Textdatei abgespeichert (16) werden, wobei die Textdatei Namen enthält, mit denen die Bilder zu je einer Task aufgerufen werden können,
d) gegenüber einem potentiellen Benutzer des Messgeräts anhand der Einträge in der Textdatei zur Präsentation Task für Task die Bilder aufgerufen (18) werden.

2. Verfahren nach Anspruch 1,
**dadurch gekennzeichnet,**
**dass** in Schritt d) die Bilder von einer Hilfsperson aufgerufen werden, die die Textdatei geöffnet vorliegen hat.

3. Verfahren nach Anspruch 1,
**dadurch gekennzeichnet,**
**dass** in Schritt d) die Bilder automatisch aufgerufen werden, wobei die Namen in der Textdatei als Aufrufsbefehle verwendet werden.

4. Verfahren nach einem der vorhergehenden Ansprüche,
**dadurch gekennzeichnet, dass**
e1) dem potentiellen Benutzer die Möglichkeit gegeben wird, die Taskreihenfolge zu ändern (24), so dass ihm nach Ablauf der Dialogbilder zu einer Task Bilder mit Dialogtexten zu einer von ihm vorgeschlagenen Task präsentiert werden, wobei vorzugsweise die Textdatei geändert (26) oder ergänzt wird.

5. Verfahren nach einem der vorhergehenden Ansprüche,
**dadurch gekennzeichnet, dass**
e2) dem potentiellen Benutzer die Möglichkeit gegeben wird, Computereingaben (24) zu machen, und dass diese protokolliert werden.

6. Verfahren nach einem der vorhergehenden Ansprüche,
**dadurch gekennzeichnet,**
**dass** das Bild in Schritt b) aus einem Textformat heraus erzeugt wird.

## Geänderte Patentansprüche

### Geänderte Patentansprüche gemäss Regel 86(2) EPÜ.

**1.** Verfahren zum Unterstützen eines Benutzerfreundlichkeitstests der Bedienungsabläufe in einem zumindest teilweise softwaregesteuerten Messgerät,
**dadurch gekennzeichnet, dass**
a) typische Bedienungsabläufe (10) des Messgeräts in einzelne Tasks unterteilt (12) werden, nach deren Ablauf ein Benutzer des Messgeräts eine Ablaufentscheidung über die als nächstes ablaufende Task treffen kann,
b) zu jeder Task zumindest ein auf einem Bildschirm anzeigbares Bild mit Dialogtexten (14) aufrufbar gemacht wird,
c) typische Bedienungsabläufe des Messgeräts als Reihenfolge der Task in Form einer Textdatei abgespeichert (16) werden, wobei die Textdatei Namen enthält, mit denen die Bilder zu je einer Task aufgerufen werden können,
d) gegenüber einem potentiellen Benutzer des Messgeräts anhand der Einträge in der Textdatei zur Präsentation Task für Task die Bilder aufgerufen (18) werden, und dass
e1) dem potentiellen Benutzer die Möglichkeit gegeben wird, die Taskreihenfolge zu ändern (24), so dass ihm nach Ablauf der Dialogbilder zu einer Task Bilder mit Dialogtexten zu einer von ihm vorgeschlagenen Task präsentiert werden, wobei vorzugsweise die Textdatei geändert (26) oder ergänzt wird, und/oder
e2) dem potentiellen Benutzer die Möglichkeit gegeben wird, Computereingaben (24) zu machen, und dass diese protokolliert werden.

**2.** Verfahren nach Anspruch 1,
**dadurch gekennzeichnet,**
**dass** in Schritt d) die Bilder von einer Hilfsperson aufgerufen werden, die die Textdatei geöffnet vorliegen hat.

**3.** Verfahren nach Anspruch 1,
**dadurch gekennzeichnet,**
**dass** in Schritt d) die Bilder automatisch aufgerufen werden, wobei die Namen in der Textdatei als Aufrufsbefehle verwendet werden.

**4.** Verfahren nach einem der vorhergehenden Ansprüche,
**dadurch gekennzeichnet,**
**dass** das Bild in Schritt b) aus einem Textformat heraus erzeugt wird.
